# EUROPEAN PATENT SPECIFICATION

(11) **EP 3 431 174 B1**
(45) Date of publication and mention of the grant of the patent: **01.01.2020**
(21) Application number: 17305981.7
(22) Date of filing: 21.07.2017
(51) Int. Cl.: B01J 8/00

(54) **METHOD FOR REMOTELY REMOVING A LOAD FROM A LOAD FIXED BED VESSEL**
VERFAHREN ZUR ENTFERNTEN BESEITIGUNG EINER LAST VON EINEM LASTFESTBETTSYSTEM
PROCÉDÉ DE RETRAIT À DISTANCE D'UNE CHARGE À PARTIR D'UN RÉCIPIENT À LIT FIXE DE CHARGE

(43) Date of publication of application: 23.01.2019
(73) Proprietor: Veolia environnement-VE, 75008 Paris (FR)
(72) Inventor: BOYER, Michel, 13920 Saint Mitre Les remparts (FR); BERCY, Jean, 75017 Paris (FR); COLE, Matthew, CO 80524 (US)
(74) Representative: Novagraaf Technologies

(56) References cited:
- WO-A1-2004/058572
- JP-A- 2013 226 520
- US-A1- 2009 214 403

## Description

The present invention relates generally to a method for removing a load from a load fixed bed vessel.

By load, it is meant in the sense of the present invention a pyrophoric or explosive material in powdery or granular form, such as a catalyst or a molecular sieve.

If the charge is a catalyst, the load fixed bed vessel is a vessel designed for performing a catalytic reaction, for instance hydrodesulphurization (HDS).

In particular, when catalyst replacement is required in a reactor, current practice requires isolating partially the reactor vessel (notably by blanking the inlets and outlets), connecting an inert gas source (for instance a nitrogen source in the case of a HDS reaction) to cool and purge the catalyst, and then removing the equipment at the top of the reactor (notably in the form of an elbow). However these activities are typically followed by manned entries into the vessel where the free flow catalyst is extracted by gravity or by a vacuum collection system or the agglomerated catalyst is manually broken up and/or is extracted by vacuum collection system. The current process exposes personnel to many occupational hazards. These hazards include:
- exposure to pyrophoric and self-Heating substances: catalyst exposed to the oxygen in air can generate heat to the point where the material can ignite and burn or become a heat source to ignite flammable or explosive gas mixtures;
- oxygen deficient atmospheres: an inert gas such as nitrogen is generally used to displace oxygen to prevent spontaneous combustion of the catalyst. Improperly protected personnel are subject to asphyxiation (nitrogen gassing) in these atmospheres;
- confined spaces: the reactor vessel is not designed for human occupancy and has a restricted means of entry and exit. It contains a hazardous atmosphere (lack of oxygen and potential for explosion), and the condition of the catalyst poses a potential for engulfment of the worker;
- flammable/explosive atmospheres: residual gas vapors in the reactor vessel may exist in concentrations great enough to burn or explode. The potential for this hazard can also exist outside the vessel. When the reactor is opened, it is also possible to find inert gas around the reactor, in its immediate environment.
- release of stored energy: the accumulation of compressed (for instance nitrogen) purge gas can exist beneath a crusted layer of catalyst. Breaking through the crust can create an energetic release of pressurized gas.

There thus exists the need for a method for removing a load such as a catalyst from a load fixed bed vessel that eliminates all worker entries for the removal of the load, namely for extracting the free flow catalyst by gravity or by a vacuum collection system, or for manually breaking up or extracting by vacuum collection the agglomerated catalyst. WO2004/058572 discloses a method for removing catalyst from a fixed bed.

In that pursuit, the present invention proposes a method in which these tasks are realized by a remotely controlled telescopic system comprising a telescopic arm. The telescopic system is mounted to the top opening of the vessel. This system contains a telescopic arm that is capable of extending into the vessel and reaching all its interior surfaces. The telescopic arm deploys tools into the vessel to provide access to the load and to remove it. Use of the telescopic system prevents the need for worker entry into the vessel for load removal. Once installed, removal of the system is not required until collection of the load is complete.

More particularly, the subject matter of the present invention is a method for removing a load from a fixed bed vessel, said vessel comprising:
▪ a top end and a bottom end,
▪ optionally one or several manways,
▪ an inlet opening for introducing a liquid into the vessel, said inlet opening being positioned at the top end of the vessel through which an inlet conduit extends inside the vessel;
▪ one or more of spaced-apart load levels arranged along the vessel, each level comprising:
   o a distributor tray for evenly distributing the liquid, said distributor tray comprising a manway element,
   o a load support system supporting a layer of load, said load support system being positioned below the distribution tray,
   o a drain pipe being positioned at the bottom of the vessel,
   said method comprising:
   - A) first preparing the vessel by:
      ∘ A1) partially isolating the vessel;
      ∘ A2) purging the vessel;
      ∘ A3) dismantling the inlet conduit
      ∘ A4) checking the parameters of the atmosphere inside the vessel;
   - B) gaining an access to the upper layer of load through the distributor tray of the upper level by removing the manway element of the distributor tray of said level;
   - C) checking the parameters of the atmosphere inside the vessel, this monitoring being set in continuous mode during the whole operation;
   - D) removing the load by:
      ∘ D1) determining which portion of the load is to be skimmed off by vacuum collection and skimming off said portion; and/or
      ∘ D2) removing by gravity, through the drain pipe, the portion of the load which is capable of flowing freely; the drain pipe could be inside or outside the vessel;
      ∘ D3) after complete removal of the load of the upper load level, gaining access to the next level;
   - E) repeating steps B to D for each level positioned below the upper level until all the load is completely removed from the vessel,
   said method being characterized in that:
   - It further comprises, between steps A and B, a step B' of installing, at the top of the vessel, a remotely controlled telescopic system comprising a telescopic arm having an end equipped with a tool changer, an array of tools that can be fixed to said tool changer, a housing for retracting said telescopic arm, said housing comprising a tool port at its bottom ;
   - steps B to D and E are remotely carried out with said remotely controlled telescopic system, each sub-step of step D being separated by the retracting of said telescopic arm in the housing for fixing, in the tool port, a tool at the tool changer which is adapted to the step to be performed.

Implementation of the remotely controlled telescopic system of the invention comes with little operational risk and reduces time spent by workers at the top of the vessel. Then, the telescopic arm deploys tools into the vessel to provide access to and removal of the load, and thus prevents the need for worker entry into the vessel for catalyst removal.

If difficulties arise due to the use of this system of the invention, it is simple to revert to manual operations, access using tool port.

Preferably, the method of the invention comprises, for driving the arm and/or for assessing the state of the load, the fixation of a camera at the telescopic arm.

Advantageously, according to a first embodiment of the method of the invention, the removing of the manway element of the distributor tray in step B is performed in fixing, at the tool changer, a shear tool that is designed for removing wire clips used as means for securing the manway element to the distributor tray.

Advantageously, according to a second embodiment of the method of the invention, the removing of the manway element of the distributor tray in step B is performed in fixing, at the tool changer, a gripper tool that is designed for removing the means for securing the manway element to the distributor tray.

Advantageously, according to a third embodiment of the method of the invention, the removing of the manway element of the distributor tray in step B is performed in fixing, at the tool changer, an impact tool that is designed for removing the fasteners used as means for securing the manway to the distributor tray.

Advantageously, step B of the method of the invention may further comprise the catching and the lifting of the manway element which is performed in fixing, at the tool changer, a lifting device that is designed for catching by any means the said manway element.

Preferably, the method of the invention comprises, for assessing the state of the catalyst in sub-step D1, the fixation, at the tool changer, of a camera.

Advantageously, the method of the invention may further comprise, for vacuuming the load in sub-step D1, the fixation at the tool changer, of a vacuum collection tool.

Advantageously, step D of the method of the invention may further comprise a sub-step D'2 of reducing the size of the load if it is agglomerated and removing it by vacuum collection, which is carried out in fixing at the tool changer a rotary-hammer vacuum collection tool.

Advantageously, the remotely controlled telescopic system may further comprise a tether management system for deploying said telescopic arm inside the vessel and retracting it in the housing.

In the frame of the invention, the load may be a catalyst or a molecular sieve.

Advantageously, the load support system may consist of a tray or a balls bed.

Other advantages and features of the present invention will arise from the description that follows, given as a non-limiting example and made with reference to the annexed figures:
- Figure 1 is a schematic section view of a fixed bed vessel consisting of a HDS reactor in which the load is a catalyst, this reactor having an inlet opening in the form of an elbow at its top end,
- Figure 2 is a picture showing workers entering the HDS reactor of figure 1 through the opening at the top of the reactor, in the frame of the current manual process of removing a catalyst from a reactor vessel,
- Figure 3 is a picture showing the removal of the manway element of the distributor tray of the upper level, in the frame of the current manual process of removing a catalyst from a reactor vessel,
- Figure 4 is a schematic section view of the process of removing the portion of contaminated catalyst by vacuum collection in the frame of the current manual process of removing a catalyst from a reactor vessel,
- Figure 5 is a picture showing the gravity unloading of the catalyst that is capable of flowing freely in the frame of the current manual process of removing a catalyst from a reactor vessel,
- Figure 6 shows different examples of agglomerated catalyst that cannot be collected by gravity unloading or by vacuum collection, in the frame of the current manual process of removing a catalyst from a reactor vessel,
- Figure 7 is a picture showing the removal of the manway element of the load support tray of a lower level, in the frame of the current manual process of removing a catalyst from a reactor vessel,
- Figure 8 is a schematic section view of the remotely controlled telescopic system used in the method of the invention that is placed on the opening at the top of the HDS reactor of figure 1, the telescopic system containing a housing in which a telescopic arm is retracted,
- Figures 9 to 11 are schematic section views of an HDS reactor, showing the telescopic arm of figure 8 that is mounted to the top opening of the vessel and extends into :
   o the first level of the reactor vessel in figures 9A and B,
   o the second level of the reactor vessel in figures 10A and 10B, and
   o the last level of the reactor vessel in figures 11 A and 11B,
- Figures 12 show an array of tools that can be fixed to the end of the telescopic arm, by the means of a tool changer,
- Figure 13 is a detailed view of the tool changer illustrated in figure 12,
- Figure 14 is a detailed view of the shear tool illustrated in figure 12 (see part A of figure 14), and its operating mode, (see part B of figure 14),
- Figure 15 is a detailed view of the impact wrench tool illustrated in figure 12 (see part B of figure 15), and its operating mode (see part 1 of figure 15),
- Figure 16 is a detailed view of the lifting tool illustrated in figure 12 (see part A of figure 16), and its operating mode, (see part B of figure 16)
- Figure 17 is a detailed view of the rotary-hammer vacuum collection Tool illustrated in figure 12,
- Figure 18 is a detailed view of the housing and the tool port of the remotely controlled telescopic system used in the method of the invention,
- Figure 19 is a detailed view of the tether management system alloying the telescopic arm to be deployed inside the reactor.

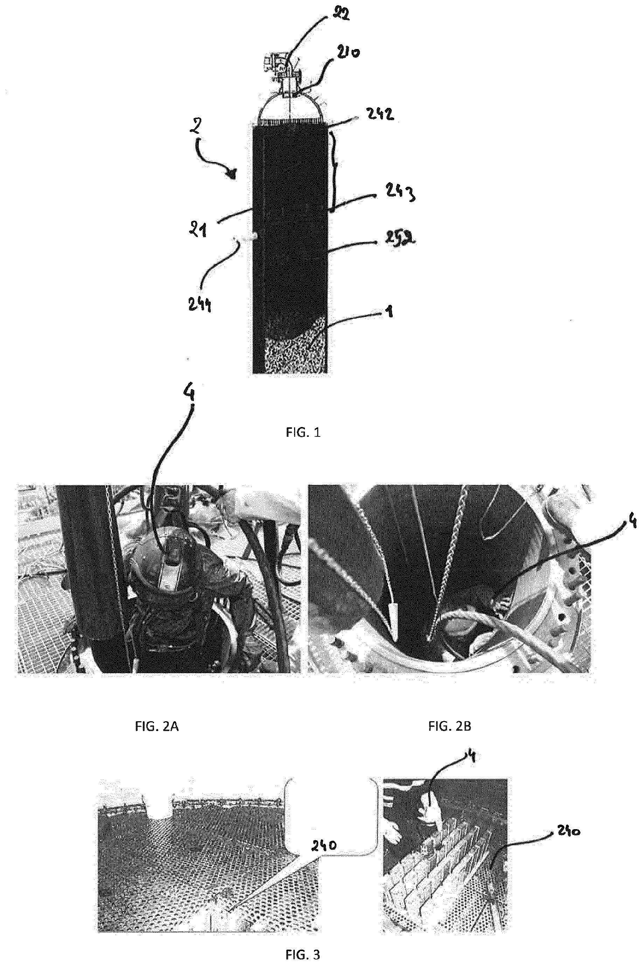

Identical components shown on figures 1 to 19 are hereafter identified by identical reference numbers.

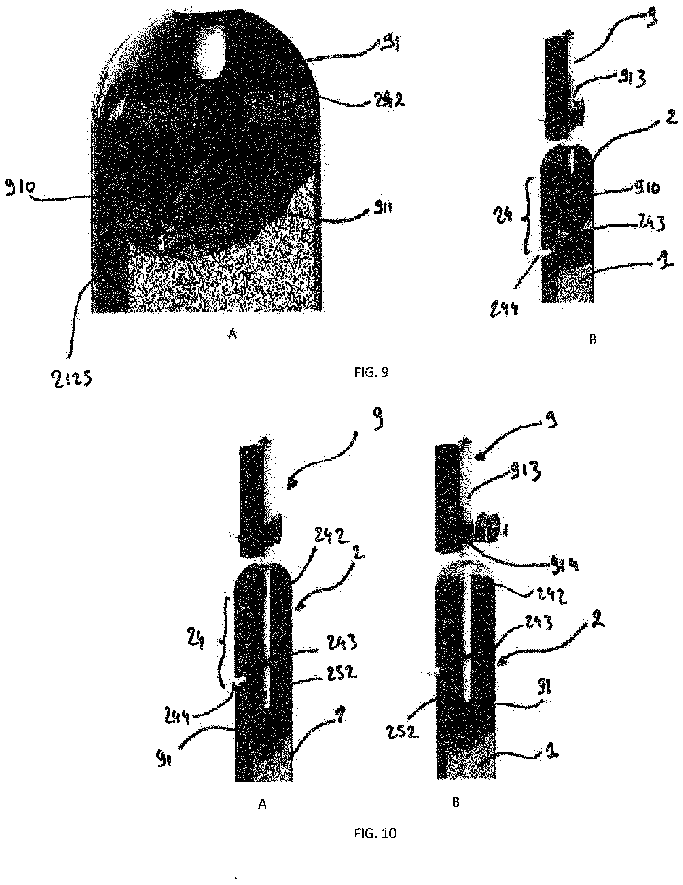

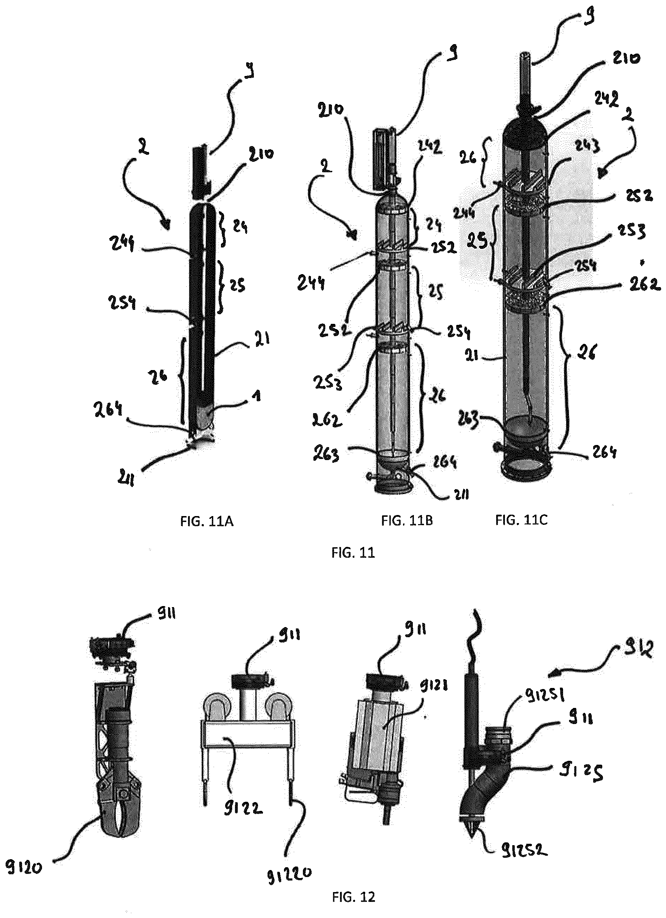

In Figure 1 (see also figures 9 to 11) is shown a typical HDS reactor, having as inlet opening an elbow to be removed at its top end. It is a catalytic fixed bed reactor 2 designed for performing a Hydrodesulphurization (HDS) that comprises:
▪ a vertical hollow shell 21 with a top end 210 and a bottom end 211 (see also figure 11 with the remotely system of the invention),
▪ an inlet conduit 22 for introducing a liquid reactant (for instance a fuel) to the reactor 2 flowing through the bed, the inlet conduit 22 (in the form of an elbow) being positioned at the top end 210 of the shell 21 and comprising an inlet conduit extending inside the hollow shell 21 (not shown in figures 1 and 9 to 11),
▪ one or more spaced-apart load levels 24, 25, 26 arranged along the shell 21, consisting of catalyst levels.
▪ a drain pipe 244, 254, 264 at the bottom of each level (see also figures 9B, 10, and 11) for draining the catalyst 1 outside the reactor 2.

For the purpose of the present invention, the terms *"load level*", and in the present case *"catalyst level"* means a level 24, 25, 26 of the bed reactor comprising:
▪ a distributor tray 242, 252, 262 for evenly distributing and giving passage to the reactant there through, this distributor tray 242, 252, 262 comprising a manway element 240, 250, 260,
▪ below the distribution tray 242, 252, 262, a load support system 243, 253, 263 supporting a layer of catalyst 1, and
▪ a drain pipe 244, 254, 254 being positioned at the bottom of the level 24, 25, 26.

Figures 1 to 5 and 7 show different steps of the current manual process (hereafter called the baseline process) of removing a catalyst from a catalytic fixed bed reactor.

The baseline process comprises the following steps:
- A) the site preparation (performed outside the reactor);
- B) gaining an access to the upper layer of catalyst through the distributor tray 242 of the upper catalyst level 24 by removing the manway element 240 of the distributor tray 242 of this level 24;
- C) checking of the parameters of the atmosphere inside the HDS reactor 2 (i.e. temperature, concentration of combustible gases, and oxygen concentration);
- D) removal of the catalyst 1; and
- E) repeating steps B to D for each level 25, 26 positioned below the upper level 24 until all the catalyst 1 is completely removed from the reactor 2.

As regards step A), the site preparation includes the following sub-steps:
∘ A1) isolating the reactor 2, notably by installing blind flanges on the inlets and the outlets of the reactor 2;
∘ A2) purging the reactor 2 by connecting a nitrogen purge system to the reactor 2, for cooling the reactor 2 to a temperature below 38°C and controlling the concentration of combustible gases inside the reactor below their Lower Explosive Limit (LEL) and decreasing the oxygen concentration to a value close to zero (target value); and
∘ A3) Dismantle the upper elbow 22 and the inlet conduit at the top of the reactor (see figure 1).
∘ A4) checking the parameters of the atmosphere inside the vessel 2 (i.e. the temperature and the concentration of the combustible gases and the oxygen concentration) ;

By the terms "Lower Explosive Limit (LEL)", it is meant, in the sense of the present invention, the lowest concentration (in percentage) of a gas or a vapor in air capable of producing a flash of fire in presence of an ignition source (arc, flame, heat) . At a concentration in air lower than the LEL, gas mixtures are "too lean" to burn. Methane gas has an LEL of 5.0%. If the atmosphere has less than 5.0% methane, an explosion cannot occur even if a source of ignition is present.

Step A is followed step B that is carried out, in the baseline process, by the entry of operators 4 (figure 2). They are equipped with a protective equipment to address the hazards encountered in the confined space inside the reactor 2. Once inside the reactor 2, the operators 4 establish a passage through distributor tray 242 of the upper level 24 by removing the manway element 240 of the distributor tray 242 (see Figure 3) dismantling cap screws or keys. It is necessary to remove these fasteners in order to allow the manway of the distributor tray 240 to be removed (see figure 3).

At this point (step C), the operators 4 check the catalyst for free-flow, verify the parameters of the atmosphere inside the reactor under the tray (temperature, concentration of combustible gases, and oxygen concentration) and where applicable, install a nitrogen return line.

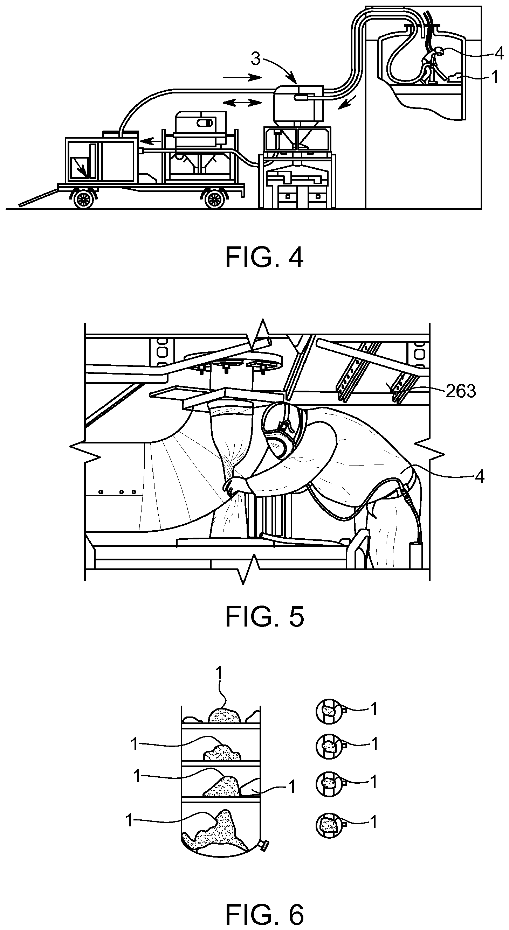

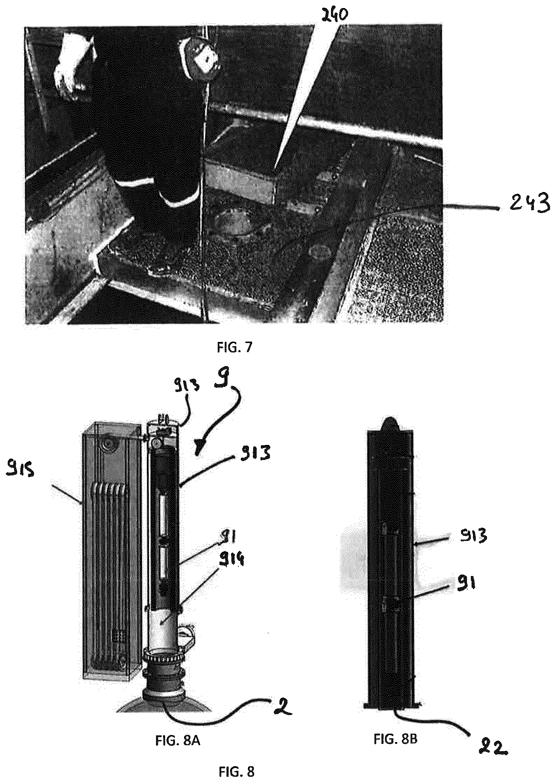

Step C is followed by the removal as such of the catalyst 1 (step D). In the baseline process, step D is carried out as follows:
∘ D1) an assessment is made by the operator 4 of the state of the catalyst to determine which portion of the catalyst layer 1 is to be skimmed off said 610, 620, 630 by vacuum collection (notably because it is too contaminated to be retained), and skimming off said portion which thus requires the staging of a vacuum collection equipment (see figure 4) at the base of the reactor 2, and/or
∘ D2) removing by gravity the portion of the catalyst 1 which is capable of flowing freely through the drain pipes 244, 254, 264; the remaining catalyst that has not been eliminated by gravity is called the catalyst pile (as shown in figure 6);
∘ D'2) Operators 4 are lowered to the catalyst pile to assist the flow of the remaining catalyst 1 for gravity unloading or to collect the remaining material using a vacuum collection equipment 3 as shown in figure 4. In some instances, agglomerated catalyst is encountered that cannot be collected by gravity unloading or by simple vacuum collection (see figure 6). In these cases, an operator 4 size reduces the size of catalyst 1 using a drill or trepan for collection by the vacuum collection system.
∘ After complete removal of the catalyst 1 (step D3) of the upper catalyst level 24, operators establish an access to the next catalyst levels 25. This requires the removal of the manway elements (240) of the catalyst support system (243) (see figure 7) that are also secured by various technologies such as keys and/or fasteners). As these components are removed, they are stored at the upper catalyst support tray (243) .

The process of removing the remaining catalyst 1 and gaining access to the successive layers is repeated (step E) until all catalyst 1 is removed from the reactor 2.

As regards the method of the invention, only step A is similar to step A of the baseline method.

According to the method of the invention, a supplementary step B' is realized between steps A and B, which consists of installing, at the top of the vessel 2), a remotely controlled telescopic system 9 for performing the tasks of steps B to D that are usually performed by an operator 4 in the baseline process.

Figures 8 to 11 show this remotely controlled telescopic system 9. It is placed on the opening at the top end of the reactor 2 comprises:
- a telescopic arm 91 having an end 910 equipped with a tool-changer 911,
- an array of tools 912 that can be fixed to the tool changer 911,
- a housing 913 for retracting the telescopic arm 91, this housing 913 comprising a tool port 914 at its bottom.

In the method of the invention, this telescopic system 9 is installed (step B') between steps A and B (when the site preparation activities are complete), and each sub-step of step D is separated by the retracting of the telescopic arm 91 in its housing 913 for fixing, in the tool port 914, a tool 912 to the tool-changer 911 that is adapted to the step to be performed.

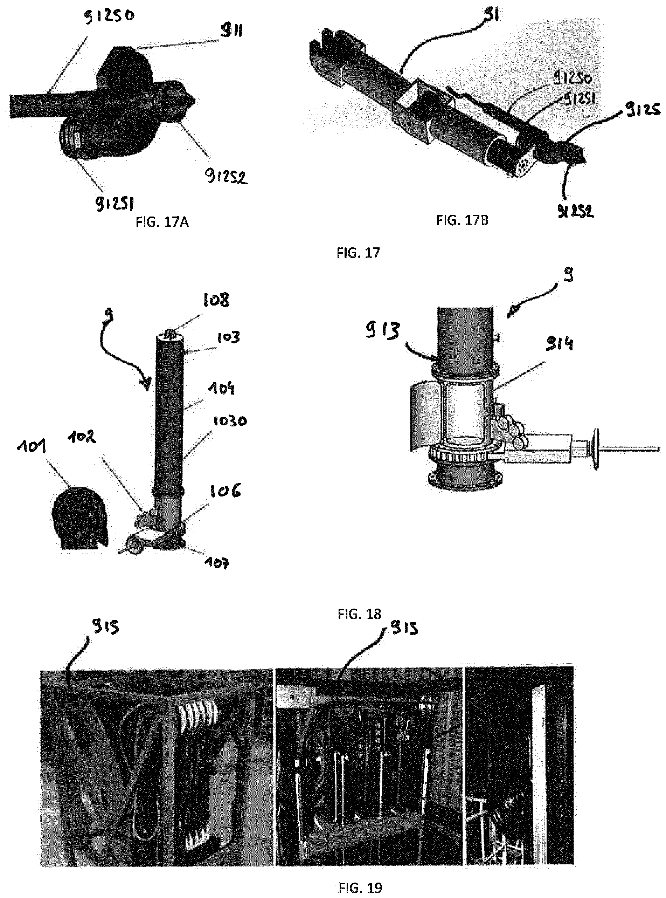

The housing 913 is the main structural component of the telescopic system 9. It is designed with the following features and functions (see figure 18):
- a system cover 104: constructed of heavy wall tube, provides penetrations 103 for the hose management system and penetrations 1030 for a nitrogen purge/inert line. It covers and protects the telescoping tubes and arm during handling operations,
- a lifting feature 108 that is top mounted for easy installation/removal of the tool,
- a transition spool 107 that adapts the telescopic system 9 of the invention to the top of the reactor vessel 2,
- a hose Reel 101 and rollers 102 that manage the vacuum hoses at the top of the reactor 2. Vacuum hoses will be routed inside the vessel on the outside of the telescoping tube. This equipment shall accommodate a vacuum hose with 102 mm ID / 116 mm OD (ID for internal diameter and OD for external diameter) with a minimum bend radius of 255mm. Each hose reel will accommodate up to 30 m of hose equipped with Guillemin symmetric connectors. The hose reel 101 will provide fittings for attaching the vacuum line from the vacuum collection system 91 allowing tool change out. Hatches can be closed to provide better control of the inert atmosphere.

The remotely controlled telescopic system 9 further comprises a tether management system 915 for deploying said telescopic arm 91 inside the reactor 2 and retracting it in the housing 913 (see figure 19).

Services for the arm and tools inside the reactor vessel are provided through the tether. The tether is managed by a mechanism 915 that pays out the tether when the arm 91 extends into the vessel 2 and collects the tether when the arm is retracted. The tether management system 915 is housed in an airtight enclosure that is attached to the tether management penetration on the housing 913.

The telescopic arm 91 is designed for being equipped with an array of tools 912 that include the rotary-hammer vacuum collection tool 9125 for size reducing and collecting catalyst, and also tools to remove fasteners or clips and to lift the catalyst support trays 243, 253, 263, the quench system manways (not shown in the figures), and the distribution trays 242, 252, 262.

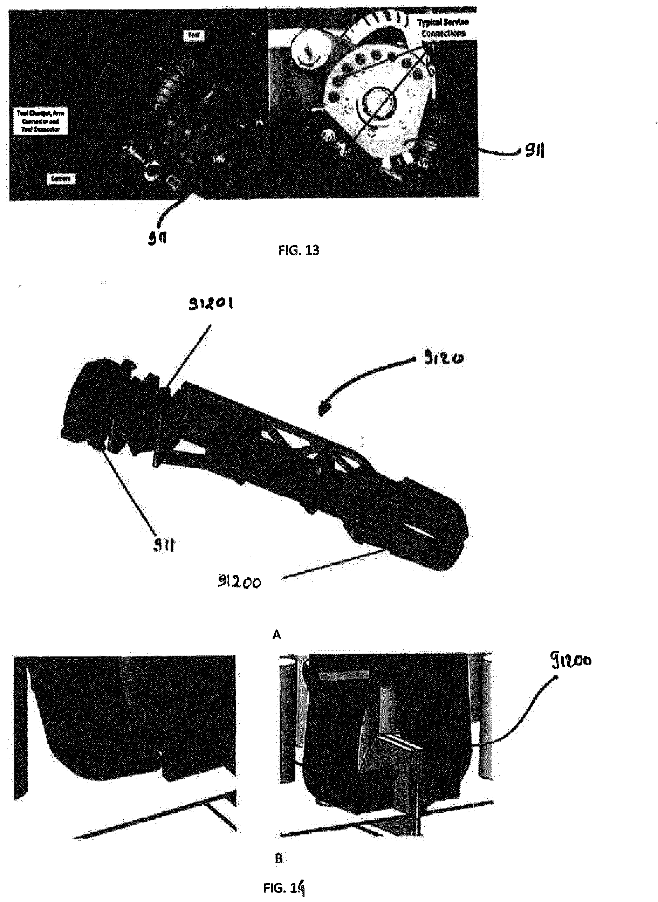

To remove the manway element 240 of the upper distributor tray 242 in step B, the telescopic arm 91 of the telescopic system 9 is retracted into the housing 913 and a shear tool 9120 is installed on the arm 91 at the tool port 914 if the distributor tray 242, 252, 262 is secured to the shell 21 by means of wire clips (figures 12 and 14A). The arm 91 is deployed to grasp the wire clips and pull the clip from the key (deforming the clip). The key is then pressed from the post or plate (14B).

The shear tool 9120 is a hydraulically operated device deployed by the telescoping arm 91. The quick-change tool (or tool changer) 911, mounted to the end of the arm 91, allows connection of the shear tool 9120 to the arm 91 and also connection of all of the hydraulic lines in one quick operation. The shear tool 9120 is equipped with a shock isolator 91201 to minimize transmission of the recoil forces to the arm 91 generated by the shearing process (see figure 14A). The prehensile gripping head 91200 is designed to grasp or sever the wire clips used to secure the keys in the flat and round posts securing the various trays in place (see figure 14B). The gripping head is also designed to press the keys from the posts (see figure 14B).

If the distributor tray 242 is installed using fasteners, the telescopic arm 91 is retracted into the housing 913 where an impact wrench tool 9121 (see figure 13B) is fixed to the tool changer 911. The impact tool 9121 is deployed to the distribution tray 242, 252, 262 and the fasteners are removed (see figure 13A) .

Care will be taken to ensure that the wire clips, keys, and/or fasteners are not placed in the catalyst 1. They will be placed on a distributor tray 242, 252, 262 or on load support tray 243, 253 and eventually 263 and recovered when the components are reinstalled.

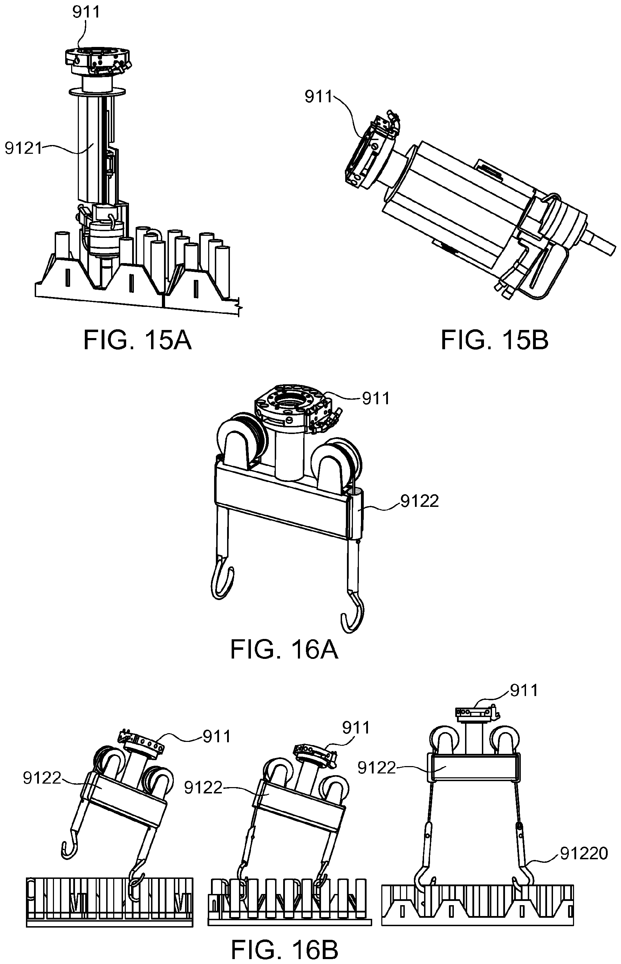

The impact wrench tool 9121 is a hydraulically operated device deployed by the telescoping arm. The quick-change tool 911, mounted to the base of the tool 9121, allows connection of the tool to the arm 91 and connection of all of the hydraulic lines in one quick operation. The impact wrench tool 9121 is equipped with a shock isolator to minimize transmission of the recoil forces to the arm generated by the twisting impact forces generated during fastener removal process (see figure 15).

When the removal of the distributor tray 242 is completed, the arm 91 is retracted into the housing 913.

The shear tool 9120 or the impact tool 9121 are then removed, and a lifting device 9122 is installed at the tool port 913 (see figures 12 and 16). The arm 91 is redeployed to lift the manway element 240 with the lifting device 9122.

Upon gaining access to a catalyst 1, an assessment is made of its upper stratum layer using a camera (not shown in the figures) on the telescopic arm 91. If it is determined that it is too polluted to be conserved and regenerated, it will be skimmed off using the arm 91 equipped with a rotary-hammer vacuum collection tool 9125 (figure 17) and packaged for disposal (step D1) . After the skimming process of the too polluted catalyst, the arm 91 is then again retracted and the rotary-hammer vacuum collection 9125 is attached. Then much of the catalyst 1 (uncontaminated) is removed by gravity (step D2) . It is collected in special containers at the base of the reactor (see figure 5).

To remove the remaining catalyst 1, the arm 91 is deployed into the catalyst 1 where the part of the catalyst 1 that is agglomerated is size-reduced or not and collected by vacuum collection system. The rotary-hammer-vacuum collection tool 9125 is a hydraulically operated device deployed by the telescoping arm 91 (see figures 12 and 17). The rotary-hammer-tool 9125 is used only in case of agglomerated catalyst.

The quick-change tool 911, mounted to the base of the tool 9125, also allows connection of the tool 9125 to the arm 91 and connection of all of the hydraulic lines in one quick operation. The tool 9125 is equipped with a quick connect fitting 91251 for the attachment of a vacuum hose and a hydraulically-driven rotatory hammer tip 91252. The tool tip 91252 is designed to be replaceable. It is made of a softer material to minimize damage to the reactor. The tip 92152 is designed to size-reduce the agglomerated catalyst 1. The openings in the tip are sized to promote aspiration that will not clog the hose. In some variations of the device, the tip 92152 is designed with an auger feature to promote movement of the catalyst 1 into the nozzle.

When all of the catalyst 1 in a level 24 is collected, the telescopic arm 91 is retracted into its housing 913 and the process of removing components and collecting catalyst 1 is repeated (step E) until all of the catalyst 1 is completely removed from the reactor (Figures 10 and 11).

## Claims

1. Method for removing a load (1) from a fixed bed vessel(2), said vessel (2) comprising:
▪ a top end (210) and a bottom end (211),
▪ an inlet conduit (22) for introducing a liquid into the vessel(2), said inlet conduit (22) being positioned at the top end (210) of the vessel (2) and extending inside the vessel (2);
▪ one or more of spaced-apart load levels (24, 25, 26) arranged along the vessel (2), each level (24, 25, 26) comprising:
∘ a distributor tray (242, 252, 262) for evenly distributing the liquid, said distributor tray (242, 252, 262) comprising a manway element (240, 250, 260),
∘ a load support system (243, 253, 263) supporting a layer of load (1), said load support system (243, 253, 263) being positioned below the distribution tray (242, 252, 262),
∘ a drain pipe (244, 254, 264) being positioned at the bottom of the level (24, 25, 26),
said method comprising:
• A) first preparing the vessel (2) by:
∘ A1) partially isolating the vessel(2);
∘ A2) purging the vessel (2); A3) dismantling the inlet conduit (22);
∘ A4) checking the parameters of the atmosphere inside the vessel (2);
• B) gaining an access to the upper layer of load (1) through the distributor tray (242) of the upper level (24) by removing the manway element (240)of the distributor tray (242) of said level (24);
• C) checking the parameters of the atmosphere inside the vessel (2);
• D) removing the load(1) by:
∘ D1) determining which portion of the load (1) is to be skimmed off by vacuum collection and skimming off said portion; and/or
∘ D2) removing by gravity, through the drain pipe (244), the portion of the load (1) which is capable of flowing freely;
∘ D3) after complete removal of the load(1) of the upper level (24), gaining access to the next load level (25, 26) ;
• E) repeating steps B to D for each level (25, 26) positioned below the upper level (24) until all the load (1) is completely removed from the vessel (2),
said method being **characterized in that**:
• it further comprises, between steps A and B, a step B' of installing, at the top of the vessel (2), a remotely controlled telescopic system (9) comprising a telescopic arm (91) having an end (910) equipped with a tool changer (911), an array of tools (912) that can be fixed to said tool changer (911), a housing (913) for retracting said telescopic arm (91), said housing (913) comprising a tool port (914) at its bottom;
• steps B to D and E are remotely carried out with said remotely controlled telescopic system (9), each sub-step of step D being separated by the retracting of said telescopic arm (91) in the housing (913) for fixing, in the tool port (914), a tool (912) at the tool changer (911) which is adapted to the step to be performed.

2. Method according to claim 1, further comprising, for driving the arm (1) and/or for assessing the state of the load (1), the fixation at the said telescopic arm of a camera.

3. Method according to claim 1 or 2, wherein the removing of the manway element (240, 250, 260) of the distributor tray (242, 252, 262) in step B is performed in fixing, at the tool changer (911), a shear tool (9120) that is designed for removing wire clips used as means for securing the manway element (240, 250, 260) to the distributor tray (242, 252, 262).

4. Method according to claim 1 or 2, wherein the removing of the manway element (240, 250, 260) of the distributor tray (242, 252, 262) in step B is performed in fixing, at the tool changer (911), a gripper tool that is designed for removing the means for securing the manway element (240, 250, 260) to the distributor tray (242, 252, 262).

5. Method according to claim 1 or 2, wherein the removing of the manway element (240, 250, 260) of the distributor tray (242, 252, 262) in step B is performed in fixing, at the tool changer (911), an impact wrench tool (9121) that is designed for removing the fasteners used as means for securing the manway element (240, 250, 260) to the distributor tray (242, 252, 262).

6. Method according to anyone of claims 1 to 4, wherein step B further comprises the catching and the lifting of the manway element (240, 250, 260) which is performed in fixing, at the tool changer (911), a lifting device (9122) that is designed for catching by any means the said manway element (242, 243, 252, 253, 262, 263).

7. Method according to claim 1, further comprising, for vacuuming the load (1) in sub-step D1, the fixation at the tool changer (911), of a vacuum collection tool (9125).

8. Method according to anyone of claims 1 to 6, wherein step D further a sub-step D'2 of reducing the size of the load (1) if it is agglomerated and removing it (1) by vacuum collection, which is carried out in fixing at the tool changer (911) a rotary-hammer vacuum collection tool (9125').

9. Method according to anyone of claims 1 to 7, wherein the remotely controlled telescopic system (9) further comprises a tether management system (915) for deploying said telescopic arm (91) inside the vessel (2) and retracting it in the housing (913) .

10. Method according to anyone of claims 1 to 8, wherein the load (1) is a catalyst or a molecular sieve.

11. Method according to anyone of claims 1 to 8, wherein the load support system (243, 253, 263) consists of a tray or a balls bed.

## Patentansprüche

1. Verfahren zum Entfernen einer Last (1) aus einem Festbettbehälter (2), wobei der Behälter (2) umfasst:
▪ ein oberes Ende (210) und ein unteres Ende (211),
▪ eine Einlassleitung (22) zum Einleiten einer Flüssigkeit in den Behälter (2), wobei die Einlassleitung (22) am oberen Ende (210) des Behälters (2) positioniert ist und sich im Inneren des Behälters (2) erstreckt;
▪ eine oder mehrere beabstandete Lastebenen (24, 25, 26), die entlang des Behälters (2) angeordnet sind, wobei jede Ebene (24, 25, 26) umfasst:
o einen Verteilerboden (242, 252, 262) zum gleichmäßigen Verteilen der Flüssigkeit, wobei der Verteilerboden (242, 252, 262) ein Mannlochelement (240, 250, 260) umfasst,
o ein Lasttragsystem (243, 253, 263), das eine Lastschicht (1) trägt, wobei das Lasttragsystem (243, 253, 263) unter dem Verteilerboden (242, 252, 262) positioniert ist,
o ein Ablaufrohr (244, 254, 264), das an der Unterseite der Ebene (24, 25, 26) positioniert ist,
wobei das Verfahren umfasst:
• A) zuerst Vorbereiten des Behälters (2) durch:
∘ A1) teilweises Isolieren des Behälters (2);
∘ A2) Spülen des Behälters (2); A3) Abbauen der Einlassleitung (22);
∘ A4) Überprüfen der Parameter der Atmosphäre im Inneren des Behälters (2);
• B) Verschaffen eines Zugangs zur oberen Lastschicht (1) durch den Verteilerboden (242) der oberen Ebene (24) durch Entfernen des Mannlochelements (240) des Verteilerbodens (242) der Ebene (24);
• C) Überprüfen der Parameter der Atmosphäre im Inneren des Behälters (2);
• D) Entfernen der Last (1) durch:
∘ D1) Bestimmen, welcher Teil der Last (1) durch Saug-Sammlung abgezogen werden soll, und Abziehen des Teils; und/oder
∘ D2) Entfernen des Teils der Last (1), der frei fließen kann, durch Schwerkraft durch das Ablaufrohr (244) ;
∘ D3) nach vollständiger Entfernung der Last (1) der oberen Ebene (24), Verschaffen von Zugang zur nächsten Lastebene (25, 26);
• E) Wiederholen der Schritte B bis D für jede Ebene (25, 26), die unter der oberen Ebene (24) positioniert ist, bis die gesamte Last (1) vollständig aus dem Behälter (2) entfernt ist,
wobei das Verfahren **dadurch gekennzeichnet ist, dass**:
• es weiter zwischen den Schritten A und B einen Schritt B' des Installierens eines ferngesteuerten Teleskopsystems (9) an der Oberseite des Behälters (2) umfasst, das einen Teleskoparm (91) umfasst, der ein mit einem Werkzeugwechsler (911) ausgerüstetes Ende (910), eine Reihe von Werkzeugen (912), die am Werkzeugwechsler (911) befestigt werden können, ein Gehäuse (913) zum Zurückziehen des Teleskoparms (91) aufweist, wobei das Gehäuse (913) an seiner Unterseite eine Werkzeugöffnung (914) umfasst;
• die Schritte B bis D und E aus der Ferne mit dem ferngesteuerten Teleskopsystem (9) ausgeführt werden, wobei jeder Teilschritt von Schritt D durch das Zurückziehen des Teleskoparms (91) in das Gehäuse (913) getrennt ist, um in der Werkzeugöffnung (914) ein Werkzeug (912) am Werkzeugwechsler (911) zu befestigen, das für den durchzuführenden Schritt geeignet ist.

2. Verfahren nach Anspruch 1, weiter zum Ansteuern des Arms (1) und/oder zum Beurteilen des Zustands der Last (1) die Befestigung einer Kamera am Teleskoparm umfassend.

3. Verfahren nach Anspruch 1 oder 2, wobei das Entfernen des Mannlochelements (240, 250, 260) des Verteilerbodens (242, 252, 262) in Schritt B beim Befestigen eines Scherwerkzeugs (9120) am Werkzeugwechsler (911) durchgeführt wird, das dafür konzipiert ist, Drahtklammern zu entfernen, die als Mittel zum Sichern des Mannlochelements (240, 250, 260) am Verteilerboden (242, 252, 262) verwendet werden.

4. Verfahren nach Anspruch 1 oder 2, wobei das Entfernen des Mannlochelements (240, 250, 260) des Verteilerbodens (242, 252, 262) in Schritt B beim Befestigen eines Greifwerkzeugs am Werkzeugwechsler (911) durchgeführt wird, das dafür konzipiert ist, die Mittel zum Sichern des Mannlochelements (240, 250, 260) am Verteilerboden (242, 252, 262) zu entfernen.

5. Verfahren nach Anspruch 1 oder 2, wobei das Entfernen des Mannlochelements (240, 250, 260) des Verteilerbodens (242, 252, 262) in Schritt B beim Befestigen eines Schlagschraubwerkzeugs (9121) am Werkzeugwechsler (911) durchgeführt wird, das dafür konzipiert ist, die Verbindungen zu entfernen, die als Mittel zum Sichern des Mannlochelements (240, 250, 260) am Verteilerboden (242, 252, 262) verwendet werden.

6. Verfahren nach einem der Ansprüche 1 bis 4, wobei Schritt B weiter das Fassen und das Heben des Mannlochelements (240, 250, 260) umfasst, das beim Befestigen einer Hubvorrichtung (9122) am Werkzeugwechsler (911) durchgeführt wird, die dafür konzipiert ist, das Mannlochelement (242, 243, 252, 253, 262, 263) mit beliebigen Mitteln zu fassen.

7. Verfahren nach Anspruch 1, weiter die Befestigung eines Saug-Sammel-Werkzeugs (9125) am Werkzeugwechsler (911) zum Absaugen der Last (1) in Teilschritt D1 umfassend.

8. Verfahren nach einem der Ansprüche 1 bis 6, wobei Schritt D weiter einen Teilschritt D'2 des Reduzierens der Größe der Last (1), wenn dieselbe agglomeriert ist, und Entfernen derselben (1) durch Saug-Sammlung, der beim Befestigen eines Bohrhammer-Saug-Sammel-Werkzeugs (9125') am Werkzeugwechsler (911) ausgeführt wird.

9. Verfahren nach einem der Ansprüche 1 bis 7, wobei das ferngesteuerte Teleskopsystem (9) weiter ein Seilverwaltungssystem (915) zum Ausfahren des Teleskoparms (91) im Inneren des Behälters (2) und Zurückziehen desselben in das Gehäuse (913) umfasst.

10. Verfahren nach einem der Ansprüche 1 bis 8, wobei die Last (1) ein Katalysator oder ein Molekularsieb ist.

11. Verfahren nach einem der Ansprüche 1 bis 8, wobei das Lasttragsystem (243, 253, 263) aus einem Boden oder einem Kugelbett besteht.

## Revendications

1. Procédé d'élimination d'une charge (1) d'une cuve à lit fixe (2), ladite cuve (2) comprenant :
▪ une extrémité haute (210) et une extrémité basse (211),
▪ un conduit d'entrée (22) pour introduire un liquide dans la cuve (2), ledit conduit d'entrée (22) étant positionné au niveau de l'extrémité haute (210) de la cuve (2) et s'étendant à l'intérieur de la cuve (2) ;
▪ un ou plusieurs de niveaux de charge espacés (24, 25, 26) agencés le long de la cuve (2), chaque niveau (24, 25, 26) comprenant :
∘ un plateau distributeur (242, 252, 262) pour distribuer uniformément le liquide, ledit plateau distributeur (242, 252, 262) comprenant un élément de trou d'homme (240, 250, 260),
∘ un système de support de charge (243, 253, 263) supportant une couche de charge (1), ledit système de support de charge (243, 253, 263) étant positionné en dessous du plateau distributeur (242, 252, 262),
∘ un tuyau d'évacuation (244, 254, 264) étant positionné en bas du niveau (24, 25, 26),
ledit procédé comprenant :
• A) tout d'abord la préparation de la cuve (2) par :
∘ A1) l'isolement partiel de la cuve (2) ;
∘ A2) la purge de la cuve (2) ; A3) le démontage du conduit d'entrée (22) ;
∘ A4) la vérification des paramètres de l'atmosphère à l'intérieur de la cuve (2) ;
• B) l'accès à la couche supérieure de charge (1) par le biais du plateau distributeur (242) du niveau supérieur (24) en enlevant l'élément de trou d'homme (240) du plateau distributeur (242) dudit niveau (24) ;
• C) la vérification des paramètres de l'atmosphère à l'intérieur de la cuve (2) ;
• D) l'enlèvement de la charge (1) par :
∘ D1) la détermination de la portion de la charge (1) qui doit être écumée par collecte sous vide et l'écumage de ladite portion ; et/ou
∘ D2) l'enlèvement par gravité, par le biais du tuyau d'évacuation (244), de la portion de la charge (1) qui est capable de s'écouler librement ;
∘ D3) après enlèvement complet de la charge (1) du niveau supérieur (24), l'accès au niveau de charge suivant (25, 26) ;
• E) la répétition des étapes B à D pour chaque niveau (25, 26) positionné en dessous du niveau supérieur (24) jusqu'à ce que la totalité de la charge (1) soit complètement enlevée de la cuve (2),
ledit procédé étant **caractérisé en ce que** :
• il comprend en outre, entre les étapes A et B, une étape B' d'installation, en haut de la cuve (2), d'un système télescopique télécommandé (9) comprenant un bras télescopique (91) ayant une extrémité (910) équipée d'un changeur d'outil (911), un ensemble d'outils (912) qui peuvent être fixés audit changeur d'outil (911), un logement (913) pour rétracter ledit bras télescopique (91), ledit logement (913) comprenant un orifice d'outil (914) au niveau de sa partie basse ;
• les étapes B à D et E sont réalisées à distance avec ledit système télescopique télécommandé (9), chaque sous-étape de l'étape D étant séparée par la rétraction dudit bras télescopique (91) dans le logement (913) pour fixer, dans l'orifice d'outil (914), un outil (912) au niveau du changeur d'outil (911) qui est adapté à l'étape à réaliser.

2. Procédé selon la revendication 1, comprenant en outre, pour entraîner le bras (1) et/ou pour évaluer l'état de la charge (1), la fixation au niveau dudit bras télescopique d'une caméra.

3. Procédé selon la revendication 1 ou 2, dans lequel l'enlèvement de l'élément de trou d'homme (240, 250, 260) du plateau distributeur (242, 252, 262) à l'étape B est réalisé en fixant, au niveau du changeur d'outil (911), un outil de cisaillement (9120) qui est conçu pour enlever des attaches de fil métallique utilisées comme moyens d'assujettissement de l'élément de trou d'homme (240, 250, 260) au plateau distributeur (242, 252, 262).

4. Procédé selon la revendication 1 ou 2, dans lequel l'enlèvement de l'élément de trou d'homme (240, 250, 260) du plateau distributeur (242, 252, 262) à l'étape B est réalisé en fixant, au niveau du changeur d'outil (911), un outil préhenseur qui est conçu pour enlever les moyens d'assujettissement de l'élément de trou d'homme (240, 250, 260) au plateau distributeur (242, 252, 262).

5. Procédé selon la revendication 1 ou 2, dans lequel l'enlèvement de l'élément de trou d'homme (240, 250, 260) du plateau distributeur (242, 252, 262) à l'étape B est réalisé en fixant, au niveau du changeur d'outil (911), un outil de clé à chocs (9121) qui est conçu pour enlever les éléments de fixation utilisés comme moyens d'assujettissement de l'élément de trou d'homme (240, 250, 260) au plateau distributeur (242, 252, 262).

6. Procédé selon l'une quelconque des revendications 1 à 4, dans lequel l'étape B comprend en outre le fait d'attraper et de lever l'élément de trou d'homme (240, 250, 260) qui est réalisé en fixant, au niveau du changeur d'outil (911), un dispositif de levage (9122) qui est conçu pour attraper par tous moyens ledit élément de trou d'homme (242, 243, 252, 253, 262, 263) .

7. Procédé selon la revendication 1, comprenant en outre, pour aspirer la charge (1) sous vide à la sous-étape D1, la fixation au niveau du changeur d'outil (911), d'un outil de collecte sous vide (9125).

8. Procédé selon l'une quelconque des revendications 1 à 6, dans lequel l'étape D en outre une sous-étape D'2 de réduction de la taille de la charge (1) si elle est agglomérée et d'enlèvement (1) de celle-ci par collecte sous vide, qui est réalisée en fixant au niveau du changeur d'outil (911) un outil de collecte sous vide de perceuse à percussion (9125').

9. Procédé selon l'une quelconque des revendications 1 à 7, dans lequel le système télescopique télécommandé (9) comprend en outre un système de gestion de longe (915) pour déployer ledit bras télescopique (91) à l'intérieur de la cuve (2) et le rétracter dans le logement (913).

10. Procédé selon l'une quelconque des revendications 1 à 8, dans lequel la charge (1) est un catalyseur ou un tamis moléculaire.

11. Procédé selon l'une quelconque des revendications 1 à 8, dans lequel le système de support de charge (243, 253, 263) consiste en un plateau ou un lit à billes.
